# EUROPEAN PATENT SPECIFICATION

(11) **EP 2 290 732 B1**
(45) Date of publication and mention of the grant of the patent: **09.05.2012**
(21) Application number: 10169597.1
(22) Date of filing: 15.07.2010
(51) Int. Cl.: H01M 2/18

(54) **Secondary battery with insulating member**
Sekundärbatterie mit Isolationselement
Batterie secondaire dotée d'un élément isolant

(30) Priority: 01.09.2009 US 239044 P; 16.02.2010 US 706358
(43) Date of publication of application: 02.03.2011
(73) Proprietor: SB LiMotive Co., Ltd., Yongin-si Gyeonggi-do (KR)
(72) Inventor: Lee, Dong-Hyun, Gyeonggi-do (KR)
(74) Representative: Rasch, Dorit

(56) References cited:
- EP-A2- 0 469 776
- BE-A- 400 376
- JP-A- 2009 048 966
- US-A1- 2006 024 568
- US-A1- 2006 093 902

## Description

### Field of the Invention

This disclosure relates to a rechargeable battery. More particularly, this disclosure relates to a rechargeable battery including an insulating member having an improved structure between an electrode assembly and a case.

### Description of the Related Art

A rechargeable battery can be recharged and discharged, unlike a primary battery that cannot be recharged. A rechargeable battery with low capacity is used for a small portable electronic device such as a mobile phone, a laptop computer, and a camcorder, while a rechargeable battery with large capacity is used as a power source for driving a motor such as for a hybrid vehicle.

Recently, a rechargeable battery large has been developed to have large capacity, high power, and high energy density using a non-aqueous electrolyte. It can be used to drive a device, for example, a motor such as an electric vehicle requiring a large amount of electric power.

Further, a rechargeable battery with high power is generally formed with a plurality of rechargeable batteries coupled in series or in parallel. This rechargeable battery may be cylindrical or prismatic.

A prismatic rechargeable battery includes an electrode assembly including positive and negative electrodes and a separator therebetween, a case having a space for housing it, a cap plate closing and sealing the case and having a terminal hole through which a terminal is inserted, and a terminal inserted into the case and protruded outside of the case.

The electrode assembly needs to be insulated from the case. However, it is difficult to install an insulating film between the electrode assembly and the case. In addition, the insulation film may be tom apart during the installation process. When tom apart, it may cause an internal short cut, resulting in more critical problems such as explosion of a rechargeable battery and the like.

Herein, the electrode assembly is prepared by laminating positive and negative electrodes and a separator therebetween and then, spiral-winding them together, and pressing them into a flat jelly-roll. Accordingly, it has a dumbbell-shaped cross-section with both edges convex.

However, since the flat part of the electrode assembly is relatively thinner than convex parts at the edges, it may not be stably attached to the interface of a supporting part.

JP 2009 048966 discloses a battery inside a case with a stable bag-like insulating member between the side walls of the case and the electrode assembly. US 2006/024568 A1 disclose a complex insulating member between the electrode assembly and the case. EP 0 469 776 A2 discloses a separator between an anode and the cathode of the battery placed in the interior of the cathode. US 2006/093902 discloses a battery with a deformation prevention member outside a battery case.

As a rechargeable battery is repetitively charged and discharged, the electrode assembly therein is also repetitively expanded and shrunk. When the electrode assembly irregularly repeats expansion and contraction, it may deteriorate performance of the rechargeable battery.

In addition, the electrode assemblies may have a gap during the expansion. The gap may cause interfaces not to be uniform, resultantly deteriorating performance of a rechargeable battery.

### SUMMARY OF THE INVENTION

An exemplary embodiment of the present invention provides a rechargeable battery stably insulating an electrode assembly from a case but still maintaining the shape of the electrode assembly in order to solve the aforementioned problem.

According to the embodiment of the present invention, a rechargeable battery is provided comprising an electrode assembly having a first electrode, a second electrode, and a separator interposed between the first and the second electrodes the first electrode and the second electrode with the separator in-between being wound into a jelly-roll. Further, a case for mounting the electrode assembly therein and an insulating member being disposed between side walls of the case and the electrode assembly to insulate the case from the electrode assembly are provided, wherein the insulating member comprises a base in contact with the bottom of the case; a first insulating plate; a second insulating plate; a third insulating plate; and a fourth insulating plate, wherein all four insulating plates are attached to the base and are arranged to face the four side surfaces of the electrode assembly, respectively. An exploded-top view of the insulating member has the form of a cross. In other words, in an unfolded state, the insulating member is provided to have the form of a cross, and the wound electrode assembly comprises flat parts in its middle region and convex parts in its lower and upper side parts, wherein the surfaces of the first and second insulating plates being in contact with the electrode assembly are formed such that their shape corresponds to the shape of the surface of the electrode assembly having flat and convex parts, wherein the first insulating plate comprises a first supporting part and the second insulating plate comprises a second supporting part, wherein the supporting parts are flat where they contact the respective flat part of the electrode assembly, and slanted or curved in the region of the respective convex part of the electrode assembly to correspond to the shape of the electrode assembly.

According to the present invention, a rechargeable battery is provided including an insulating member between an electrode assembly and a case in order to stably insulate the electrode assembly from the case as well as uniformly maintain the interface of the electrode assembly and thereby, stably maintain capacity.

Preferably, the insulating member, when folded, matches the shape of the case. The shape of the surface of the insulating member being in contact with the electrode assembly is preferably designed to correspond to the outer shape of the electrode assembly.

Thus, advantageously the insulating member forces the retention of the shape of an electrode assembly between the electrode assembly and a case.

The supporting part is preferably closely attached to the flat part of the electrode assembly and supports the electrode assembly. Alternatively or additionally, the supporting part is shaped to have a buffering groove adapted to allow expansion of the battery; and/or is flat in the region where it contacts the flat part of the electrode assembly. Alternatively or additionally, the supporting part may be tilted or curbed in an arc shape where it contacts the convex part of the electrode assembly; and/or may have a trapezoid-shaped cross-section.

The buffering grooves advantageously help to stably support the electrode assembly and prevent its degradation.

The supporting parts are designed to stably support the flat parts and also stably support the convex parts. Advantageously, while a rechargeable battery is repetitively charged and discharged, the electrode assembly therein is repetitively expanded and shrunk. Then, the supporting parts press the flat part of the electrode assembly between the case and the electrode assembly, maintaining the shape of the electrode assembly and preventing the interface from not being uniform. As a result, the inventive rechargeable battery exhibits improved capacity retention than a battery without support parts.

The supporting parts may comprise film sheets laminated together.

The film sheets further improve the capacity retention of the battery.

The insulating member is preferably formed of one selected from the group consisting of poly propylene, poly ethylene, poly phenyl sulfate, poly buthylene terephthalate, poly tetrafluoro ethylene, perfluoroalkoxy (PFA), fluorinated ethylene propylene), poly vinylidene fluoride.

The insulating member may have the form of a cuboid with the top open.

The insulating member in one embodiment comprises a groove on the boundary between the base and the insulating plates, the groove being provided on the top of the surface of the base facing the electrode assembly or on the bottom of the surface of the base facing the case. The groove may have a triangular cross-section. It may also have a quadrangular cross-section.

The third insulating plate and the fourth insulating plate are preferably of planar shape.

The battery preferably further comprises a first terminal and a second terminal, the first terminal being connected to the first electrode via a first lead tab, the second terminal being connected to the second electrode via a second lead tab, wherein the third insulating plate is preferably disposed between the first lead tab and the case and the fourth insulating plate is preferably disposed between the second lead tab and the case.

Advantageously, by the respective provision of the third and fourth insulating plates, the lead tabs are prevented from contacting the case.

The base may have a quadrangular shape. The base may be provided with an arc-shaped top surface in the region of contact with the bottom of the electrode assembly. It may be closely attached to the bottom of the case. The base formed accordingly can stably support the electrode assembly having corresponding shapes.

### BRIEF DESCRIPTION OF THE DRAWINGS

FIG. 1 is an exploded perspective view of a rechargeable battery according to one embodiment.
FIG. 2 is a perspective view of a rechargeable battery according to a first embodiment.
FIG. 3 is a cross-sectional view taken along the III-III line of FIG. 2.
FIG. 4 is a cross-sectional view taken along the IV-IV line of FIG. 2.
FIG. 5 shows capacity change according to the charge and discharge cycle of rechargeable batteries of a first embodiment and comparative embodiment.
FIG. 6a to 6d is a partial cross-sectional view showing an insulating member according to a first embodiment and other modified embodiments of the present invention.
FIG. 7 is a perspective view showing an insulating member according to a second embodiment of the present invention.
FIG. 8 is a vertically cross-sectional view of a rechargeable battery according to a second embodiment of the present invention.

### DETAILED DESCRIPTION OF THE EMBODIMENTS

The present invention will be described more fully hereinafter with reference to the accompanying drawings, in which exemplary embodiments of the invention are shown. As those skilled in the art would realize, the described embodiments may be modified in various different ways, all without departing from the scope of the present invention. In the specification and drawings, like reference numerals designate like elements

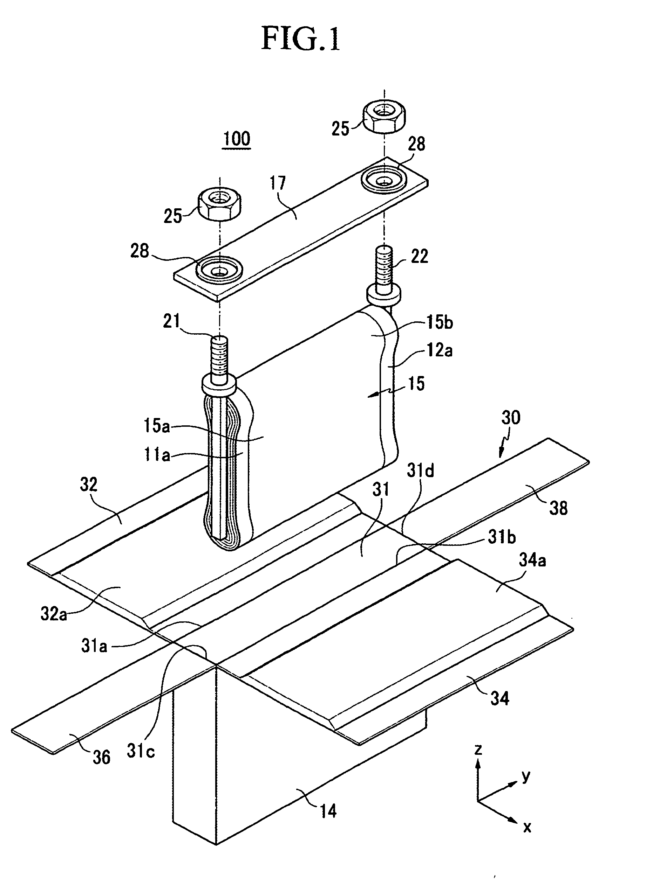

FIG. 1 is an exploded perspective view of a rechargeable battery according to one exemplary embodiment.

Referring to the drawing, the rechargeable battery 100 includes an electrode assembly 15 including a positive electrode 11 and a negative electrode 12 and a separator 13 disposed therebetween, a case 14 having a space for housing it, a cap plate 17 combined with an opening 14a of the case 14, and a positive terminal 21 and a negative terminal 22 mounted on the cap plate 17 and electrically connected to the electrode assembly 15.

The positive electrode 11 and the negative electrode 12 include a coated region coated with an active material on a current collector made of a thin metal foil plate and uncoated regions 11 a and 12a not coated with the active material. The positive uncoated region 11a is formed at one end of the positive electrode 11 along the length direction. The negative uncoated region 12a is formed at the other end of the negative electrode 12 along the length direction.

The positive electrode 11 and the negative electrode 12 are laminated with a separator 13 as an insulator in the middle and then, spiral-wound into a jelly-roll, preparing an electrode assembly 15. The electrode assembly 15 is pressed to be flat with a press and the like, so that it can be housed in the case 14. The pressed assembly 15 is pushed toward both edges and expands to be convex there, forming a convex part 15b. On the other hand, a flat part 15a is formed between the both convex parts 15b.

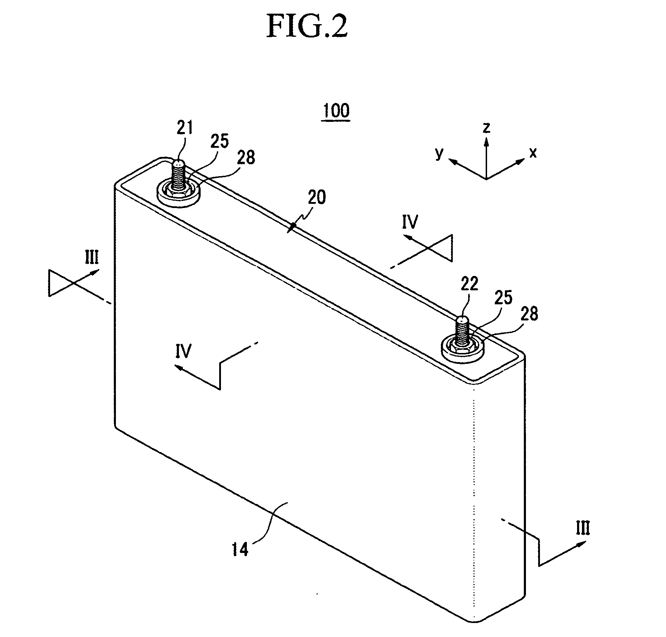

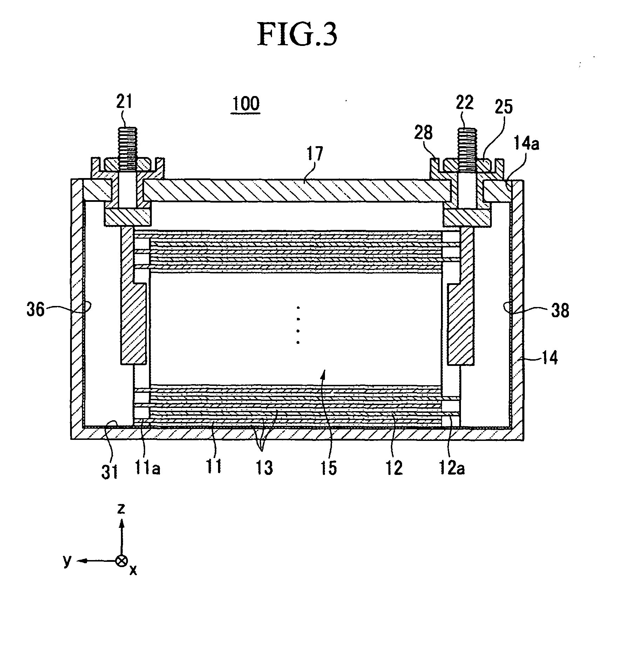

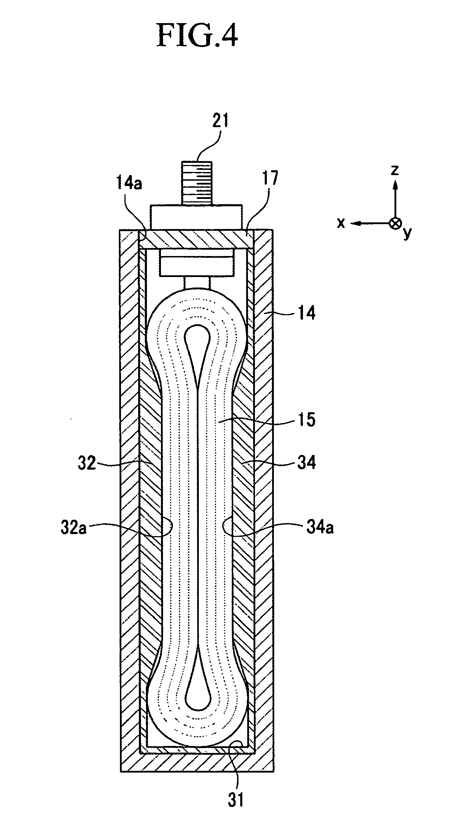

FIG. 2 is a perspective view of a rechargeable battery according to a first embodiment, FIG. 3 is a cross-sectional view taken along the III-III line of FIG. 2, and FIG. 4 is a cross-sectional view taken along the IV-IV line of FIG. 2.

Referring to FIGS. 2 to 4, the lead tab 21 a of a positive terminal 21 at one edge of an electrode assembly is welded onto a positive uncoated region 11a. The lead tab 22a of a negative terminal 22 is welded onto a negative uncoated region 12a.

The case 14 is made of a conductive metal such as aluminum, aluminum alloy, nickel-plated steel, or the like and formed as a hexahedron prism having a space for housing the electrode assembly 15 and an opening 14a at one side.

As shown in FIG. 1, an insulating member 30 is disposed for electric insulation between the case 14 and the electrode assembly 15. The insulating member 30 has a cross shape and includes a base 31 closely attached to the bottom of a case 14, a first insulating plate 32 extending from the first edge of the base 31, and a second insulating plate 34 extending from the second edge of the base 31. In addition, the insulating member 30 includes a third plate 36 extending from a third end 31c crossing with the first end 31 a and a fourth insulating plate 38 extending from a fourth end 31 d facing the third end 31 c.

The insulating member 30 may include one selected from the group consisting of PP(Poly Propylene), PE(poly ethylene), PPS(poly phenyl sulfate), PBT(Poly Buthylene Terephthalate), PTFE(Poly tetrafluoro ethylene), PFA(Perfluoroalkoxy), FEP(Fluorinated Ethylene Propylene), PVDF(Poly vinylidene fluoride).

This insulating member 30, as shown in FIG. 1, is positioned on the opening 14a of a first case 14. It is inserted into the case 14 together with the electrode assembly 15, wherein the insulating plates 32, 34, 36, and 38 are folded together when the electrode assembly 15 is inserted into the case 14.

The insulating member 30 is at large mounted as an exploded cuboid with the top open. Accordingly, its first shape is a cross. The third insulating plate 36, the base 31, and the fourth insulating plate 38 form one axis of the cross, the first insulating plate 32, the base 31, and the second insulating plate 34 form the second, perpendicular part of the cross. Thus, the central crossing portion of the cross is established by the base 31. The cross is preferably a symmetric cross, i.e. the third and fourth plates 36, 38 and the first and second plates 32, 34 extend symmetrically from the base 31.

As aforementioned, a cross shaped insulating member 30 can be bended and easily mounted between an electrode assembly 15 and a case 14 when the electrode assembly 15 is inserted into the case.

After the electrode assembly 15 is inserted therein, a nut 25 is screwed with terminals 21 and 22 and supports the electrode assembly 15 on top. In addition, a gasket 28 is installed between the nut 25 and the cap plate 17 for insulation.

Referring to FIGS. 1 and 4, a supporting part 32a is formed to be protruded on a first insulating plate 32 to be closely attached to the flat part 15a of an electrode assembly 15. In addition, another supporting part 34a on a second insulating plate 34 is formed to be closely attached to the flat part 15a on the other side of the electrode assembly 15.

The supporting parts 32a and 34a are respectively closely-attached to both sides of the electrode assembly 15. They have slanted ends, so that they can contact with the whole surface of the flat part 15a and the convex part 15b right next to the flat part 15a.

In other words, the supporting parts 32a and 34a are flat, where they contact with the flat part 15a, and slanted, where they contact with a convex part 15b, so that they can stably support the flat part 15a and also, stably contact with a part of the convex part 15b. Accordingly, the supporting parts 32a and 34a have a trapezoid-shaped cross-section.

On the other hand, the third insulating plate 36 and the fourth insulating plate 38 are disposed between lead tabs 21 a and 22a and a case 14, preventing the lead tabs 21 a and 22a from contacting with the case 14. When an insulating member 30 is inserted into a case 14, it is shaped as a cuboid with the top open.

While a rechargeable battery 100 is repetitively charged and discharged, the electrode assembly 15 therein is repetitively expanded and shrunk. Then, the supporting parts 32a and 34a press the flat part 15a of the electrode assembly 15 between the case 14 and the electrode assembly 15, maintaining the shape of the electrode assembly 15 and preventing the interface from not being uniform.

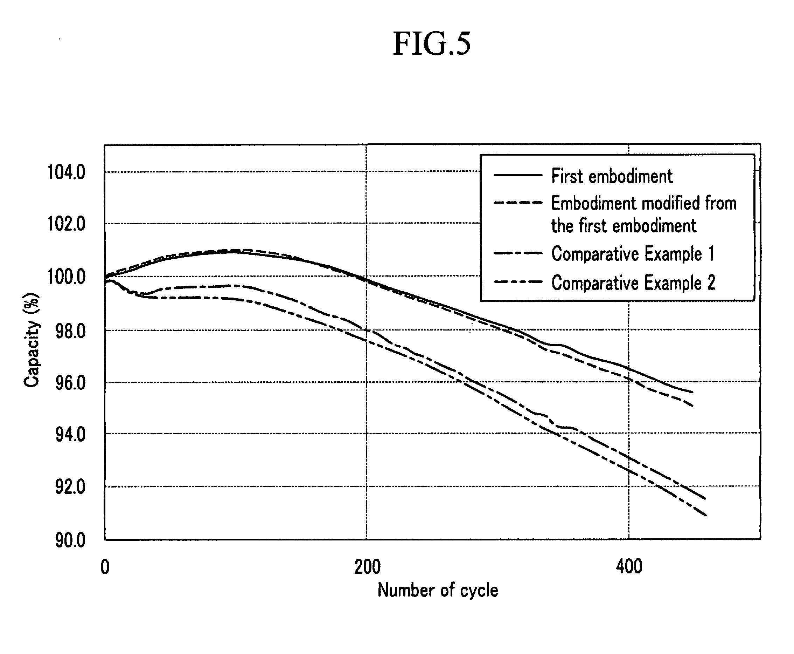

FIG. 5 is a graph showing capacity change according to charge and discharge cycle of a rechargeable battery according to the first embodiment of the present invention. The rechargeable battery has a regular current of 5A and charged and discharged from 2.8V to 4.2V with 1C.

According to the first embodiment of the present invention, a supporting part is formed by laminating 24 sheets of a film. It can be prepared to have an exact height through lamination rather than using one body. According to one embodiment modified from the first embodiment, a supporting part is formed by laminating 12 sheets of a film. A rechargeable battery of Comparative Example 1 has no supporting part. A rechargeable battery of Comparative Example 2 has no supporting part and has a non-uniform interface between the electrode assembly and the insulating member.

As shown in FIG. 5, an electrode assembly having a supporting part has little capacity change after 200 cycles of charges and discharges, but the one having no supporting part has a decreased capacity of about 98% capacity. In addition, after 400 cycles of charges and discharges, the electrode assembly having a supporting part has a decreased capacity of approximately 96%, while the one having no supporting part has a decreased capacity of almost 93%.

In conclusion, a rechargeable battery including a supporting part according to embodiments of the present invention turned out to have higher capacity retention than one having no supporting part. The reason is that the supporting part supports an electrode assembly and maintains its uniform interface. In addition, the supporting part made of 24 sheets of a film had a little higher capacity retention than one made of 12 sheets of a film.

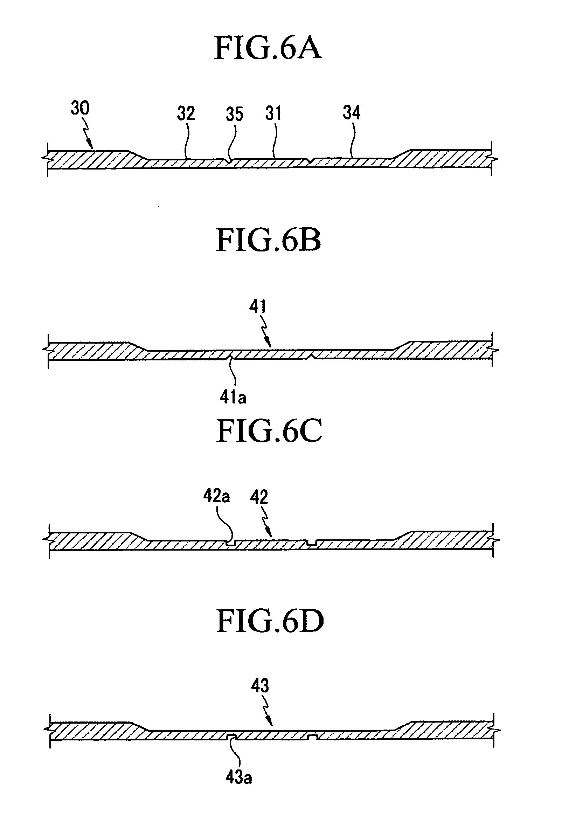

FIGS. 6A to 6D shows a partial cross-sectional view of an insulating member according to the first embodiment and its modified embodiments of the present invention.

As shown in FIG. 6A, an insulating member 30 includes a groove 35 on the boundary between a base 31 and supporting plates 32, 34, 36, and 38, so that the supporting plates can be easily folded. In the first embodiment, the groove 35 is formed to have a triangular cross-section on the top surface of the insulating member 30.

In addition, as shown in FIG. 6B, the insulating member 41 may include a groove 41 a having a triangular cross-section on the bottom surface. As shown in FIG. 6C, the insulating member 42 may include a groove 42a having a quadrangular cross-section on the top surface. In addition, as shown in FIG. 6D, the insulating member 43 may include a groove 43a have a quadrangular cross-section on the bottom surface.

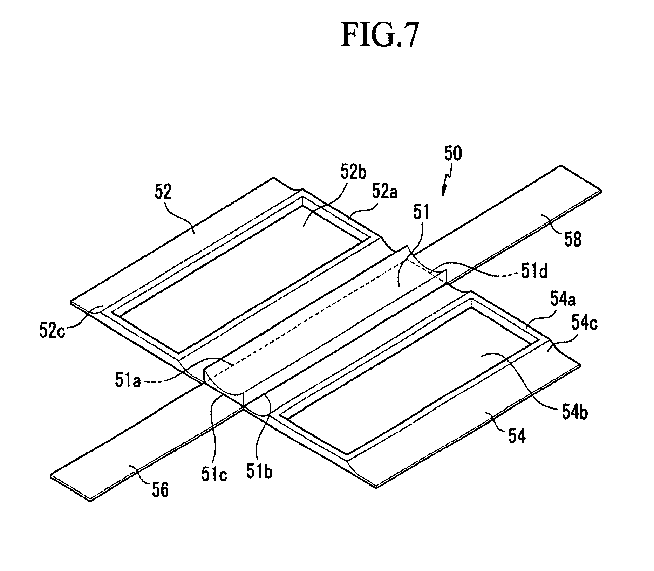

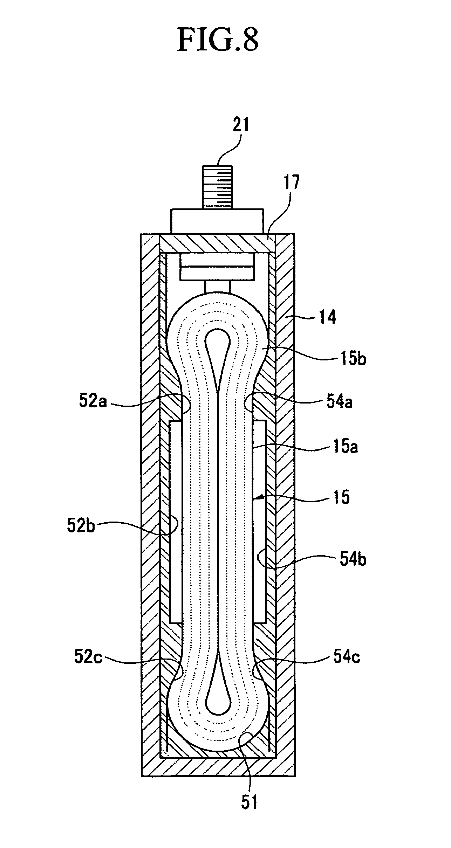

FIG. 7 is a perspective view showing an insulating member according to Example 2 of the present invention. FIG. 8 is a vertically cross-sectional view of a rechargeable battery according to Example 2 of the present invention.

Referring to FIGS. 7 and 8, since a rechargeable battery 200 according to the embodiment of the present invention has the same structure as one of the first embodiment except for an insulating member 50, it will not be illustrated in more detail.

According to the embodiment of the present invention, an insulating member 50 includes a base 51 closely attached to the bottom of a case 14, a first insulating plate 52 expanded from the first end 51 a of the base 51, and a second insulating plate 54 expanded from the second end 51 b of the base 51 opposing the first end 51a. In addition, the insulating member 50 may include a third insulating plate 56 expanded from the third end 51c crossing with the first end 51 a and a fourth insulating plate 58 expanded from the fourth end 51d facing the third end 51 c.

The base 51 has a quadrangular shape and four ends 51 a, 51 b, 51 c, and 51 d.

The base 51 may be shaped to be an arc on the top surface where it contacts with an electrode assembly 15, so that it can stably support the electrode assembly 15 having the same arc-shaped bottom. Accordingly, the base 51 can stably support the electrode assembly 15 and prevent the electrode assembly 15 from shaking from an external impact. If the electrode assembly 15 shakes, the electrode assembly 15 may have bad contact with terminals 21 and 22. However, when a base 51 has an arc shape on top, it can more stably support an electrode assembly 15.

The first insulating plate 52 includes a supporting part 52a closely attached to the flat part 15a of an electrode assembly 15 and supporting it. The supporting part 52a is shaped to be protruded and includes a buffering groove 52b in the center. The buffering groove 52b is at large quadrangular.

The supporting part 52a is flat, where it contacts with the flat part 15a of an electrode assembly, and titled and curbed like an arc where it contacts with the convex part 15b. Since the convex part 15b contacts with a supporting part 52a at top and bottom of the flat part, the supporting part 52a needs to have two curbed parts 52c.

The second insulating plate 54 includes a supporting part 54a closely attached to the flat part 15a of an electrode assembly 15. The supporting part is protruded and includes a buffering groove 54b in the center.

The supporting part 54a is flat, where it contacts with the flat part 15a, and curbed 54c like an arc where it contacts with the convex part 15b.

When the supporting part is curbed like an arc 52c and 54c according to the embodiment of the present invention, the curbed side 54c is closely attached to the convex part 15b of an electrode assembly 15. The curbed sides 52c and 54c play a role of supporting and pulling an electrode assembly at both ends. Accordingly, it can prevent the interface of the electrode assembly 15 from being non-uniform.

In addition, since an electrode assembly 15 is expanded during charges and discharges of a rechargeable battery 200, it may be deteriorated itself and decrease cycle-life of the rechargeable battery 200 when it is pressed. According to the embodiment of the present invention, buffering grooves 52b and 54b are formed in order to stably support the electrode assembly 15 and prevent its degradation,

Accordingly, the expanded electrode assembly 15 enters the buffering grooves 52b and 54b, alleviating the pressure thereon.

While this invention has been described in connection with what is presently considered to be practical exemplary embodiments, it is to be understood that the invention is not limited to the disclosed embodiments, but, on the contrary, is intended to cover various modifications included within the scope of the appended claims.

## Claims

1. A rechargeable battery comprising:
an electrode assembly (15) having a first electrode (11), a second electrode (12), and a separator (13) interposed between the first and the second electrodes (11,12), the first electrode (11) and the second electrode (12) with the separator (13) in-between being wound into a jelly-roll;
a case (14) for mounting the electrode assembly (15) therein; and
an insulating member (30, 41 , 42, 43, 50) being disposed between side walls of the case (14) and the electrode assembly (15) to insulate the case (14) from the electrode assembly (15), wherein the insulating member (30, 41, 42, 43, 50) comprises a base (31, 51) in contact with the bottom of the case (14); a first insulating plate (32, 52); a second insulating plate (34, 54); a third insulating plate (36, 56); and a fourth insulating plate (38, 58), wherein all four insulating plates are attached to the base (31, 51) and are arranged to face the four side surfaces of the electrode assembly (15), respectively,
**characterized in that**
an exploded-view of the insulating member (30, 41, 42, 43, 50) has the form of a cross, and
the wound electrode assembly (15) comprises flat parts (15a) in its middle region and convex parts (15b) in its lower and upper side parts, wherein the surfaces of the first and second insulating plates (32, 52; 34, 54) being in contact with the electrode assembly (15) are formed such that their shape corresponds to the shape of the surface of the electrode assembly (15) having flat and convex parts (15a, 15b),
wherein the first insulating plate (32, 52) comprises a first supporting part (32a, 52a) and the second insulating plate (34, 54) comprises a second supporting part (34a, 54a), wherein the supporting parts (32a, 52a; 34a, 54a):
are flat where they contact the respective flat part (15a) of the electrode assembly (15), and
slanted or curved in the region of the respective convex part (15b) of the electrode assembly (15) to correspond to the shape of the electrode assembly (15).

2. Rechargeable battery according to claim 1, wherein the insulating member (30, 41, 42, 43, 50), when folded, matches the shape of the case.

3. Rechargeable battery according to any of the previous claims, wherein the shape of the surface of the insulating member (30, 41, 42, 43, 50) being in contact with the electrode assembly (15) is designed to correspond to the outer shape of the electrode assembly (15).

4. Rechargeable battery according to claim 1, wherein the supporting part (32a, 52a; 34a, 54a) comprises at least one of the following features:
the supporting part is closely attached to the flat part (15a) of the electrode assembly (15) and supports the electrode assembly (15);
is shaped to have a buffering groove (52b) adapted to allow expansion of the battery;
is flat in the region where it contacts the flat part (15a) of the electrode assembly (15);
is tilted or curbed in an arc shape where it contacts the convex part (15b) of the electrode assembly; and
has a trapezoid-shaped cross-section.

5. Rechargeable battery according to claim 1 or 4, wherein the supporting parts (32a, 52a; 34a, 54a) comprise film sheets laminated together.

6. Rechargeable battery according to any of the previous claims, wherein the insulating member (30, 41, 42, 43, 50) is formed of one selected from the group consisting of poly propylene, poly ethylene, poly phenyl sulfate, poly butylene terephthalate, poly tetrafluoro ethylene, perfluoroalkoxy (PFA), fluorinated ethylene propylene, poly vinylidene fluoride.

7. Rechargeable battery according to any of the previous claims, wherein the insulating member (30, 41, 42, 43, 50) has the form of a cuboid with the top open.

8. Rechargeable battery according to any of the previous claims, wherein the insulating member (30, 41, 42, 43, 50) comprises a groove (35) on the boundary between the base (31) and the insulating plates (32, 34, 36, 38), the groove (35):
being provided on the top of the surface of the base (31) facing the electrode assembly (15) or on the bottom of the surface of the base (31) facing the case (14); and/or
having a triangular cross-section; and/or
having a quadrangular cross-section.

9. Rechargeable battery according to any of the previous claims, wherein the third insulating plate (36, 56) and the fourth insulating plate (38, 58) are of planar shape.

10. Rechargeable battery according to any of the previous claims, wherein the battery further comprises a first terminal (21) and a second terminal (22), the first terminal (21) being connected to the first electrode (11) via a first lead tab (21 a), the second terminal (22) being connected to the second electrode (12) via a second lead tab (22a), wherein the third insulating plate (36, 56) is disposed between the first lead tab (21 a) and the case (14) and the fourth insulating plate (38, 58) is disposed between the second lead tab (22a) and the case (14).

11. Rechargeable battery according to any of the previous claims, wherein the base (31, 51):
has a quadrangular shape; and/or
is provided with an arc-shaped top surface in the region of contact with the bottom of the electrode assembly (15); and/or
is closely attached to the bottom of the case (14).

## Patentansprüche

1. Wiederaufladbare Batterie, umfassend,
eine Elektrodenanordnung (15) mit einer ersten Elektrode (11), einer zweiten Elektrode (12) und einem zwischen die erste und die zweite Elektrode (11, 12) geschalteten Separator (13), wobei die erste Elektrode (11) und die zweite Elektrode (12) mit dem dazwischenliegenden Separator (13) biskuitrollenartig aufgewickelt sind;
ein Gehäuse (14) zum Anbringen der Elektrodenanordnung (15) in diesem; sowie ein zwischen Seitenwandungen des Gehäuses (14) und der Elektrodenanordnung (15) angeordnetes Isolierelement (30, 41, 42, 43, 50) zum Isolieren des Gehäuses (14) gegenüber der Elektrodenanordnung (15), wobei das Isolierelement (30, 41, 42, 43, 50) ein Unterteil (31, 51) aufweist, das sich in Kontakt mit dem Boden des Gehäuses (14) befindet, eine erste Isolierplatte (32, 52), eine zweite Isolierplatte (34, 54), eine dritte Isolierplatte (36, 56) sowie eine vierte Isolierplatte (38, 58), wobei sämtliche vier Isolierplatten an dem Unterteil (31, 51) befestigt und derart angeordnet sind, dass ihnen die vier Seitenflächen der Elektrodenanordnung (15) gegenüberliegen,
**dadurch gekennzeichnet, dass**
eine Explosivdarstellung des Isolierelements (30, 41, 42, 43, 50) eine Kreuzform aufweist, und
die aufgewickelte Elektrodenanordnung (15) ebene Abschnitte (15a) in ihrem mittigen Bereich sowie konvexe Abschnitte (15b) in ihren unteren und oberen Seitenteilen umfasst, wobei die sich mit der Elektrodenanordnung (15) in Kontakt befindenden Flächen der ersten und zweiten Isolierplatte (32, 52; 34, 54) derart ausgebildet sind, dass ihre Form der Form der Fläche der ebene und konvexe Abschnitte (15a, 15b) aufweisenden Elektrodenanordnung (15) entspricht,
wobei die erste Isolierplatte (32, 52) ein erstes Stützteil (32a, 52a) und die zweite Isolierplatte (34, 54) ein zweites Stützteil (34a, 54a) umfasst, wobei die Stützteile (32a, 52a, 34a, 54a) dort, wo sie den jeweiligen ebenen Abschnitt (15a) der Elektrodenanordnung (15) kontaktieren, eben sind, und im Bereich des jeweiligen konvexen Abschnitts (15b) der Elektrodenanordnung (15) abgeschrägt oder gekrümmt sind, um der Form der Elektrodenanordnung (15) zu entsprechen.

2. Wiederaufladbare Batterie nach Anspruch 1, wobei das Isolierelement (30, 41, 42, 43, 50) der Form des Gehäuses entspricht, wenn es zusammengeklappt ist.

3. Wiederaufladbare Batterie nach einem der vorstehenden Ansprüche, wobei die Form der Fläche des sich in Kontakt mit der Elektrodenanordnung (15) befindenden Isolierelements (30, 41, 42, 43, 50) so ausgeführt ist, dass sie der äußeren Form der Elektrodenanordnung (15) entspricht.

4. Wiederaufladbare Batterie nach Anspruch 1, wobei das Stützteil (32a, 52a; 34a, 54a) mindestens eines der folgenden Merkmale aufweist:
das Stützteil ist dicht am ebenen Abschnitt (15a) der Elektrodenanordnung (15) angebracht und stützt die Elektrodenanordnung (15);
ist derart geformt, dass es eine Pufferaussparung (52b) aufweist, die derart ausgebildet ist, dass sie eine Ausdehnung der Batterie zulässt;
in dem Bereich, wo es den ebenen Abschnitt (15a) der Elektrodenanordnung (15) kontaktiert, eben ist;
dort, wo es den konvexen Abschnitt (15b) der Elektrodenanordnung kontaktiert, bogenförmig geneigt oder eingefasst ist; und
einen trapezförmigen Querschnitt aufweist.

5. Wiederaufladbare Batterie nach Anspruch 1 oder 4, wobei die Stützteile (32a, 52a; 34a, 54a) laminierte Folienschichten umfassen.

6. Wiederaufladbare Batterie nach einem der vorstehenden Ansprüche, wobei das Isolierelement (30, 41, 42, 43, 50) aus einem ausgewählt aus der Gruppe bestehend aus Polypropylen, Polyethylen, Polyphenylsulfat, Polybutylenterephthalat, Polytetrafluorethylen, Perfluoralkoxy (PFA), fluoriertes Ethylenpropylen, Polyvinylidenfluorid gebildet ist.

7. Wiederaufladbare Batterie nach einem der vorstehenden Ansprüche, wobei das Isolierelement (30, 41, 42, 43, 50) die Form eines oben offenen Quaders aufweist.

8. Wiederaufladbare Batterie nach einem der vorstehenden Ansprüche, wobei das Isolierelement (30, 41, 42, 43, 50) an der Grenze zwischen dem Unterteil (31) und den Isolierplatten (32, 34, 36, 38) eine Nut (35) aufweist, wobei die Nut (35) auf der der Elektrodenanordnung (15) zugewandten Oberseite der Fläche des Unterteils (31) oder auf der dem Gehäuse (14) zugewandten Unterseite der Fläche des Unterteils (31) vorgesehen ist; und/oder
einen dreieckigen Querschnitt aufweist; und/oder
einen viereckigen Querschnitt aufweist.

9. Wiederaufladbare Batterie nach einem der vorstehenden Ansprüche, wobei die dritte Isolierplatte (36, 56) und die vierte Isolierplatte (38, 58) eine flache Form aufweisen.

10. Wiederaufladbare Batterie nach einem der vorstehenden Ansprüche, wobei die Batterie ferner einen ersten Anschluss (21) und einen zweiten Anschluss (22) umfasst, wobei der erste Anschluss (21) mit der ersten Elektrode (11) über einen ersten Leitungsstreifen (21 a) verbunden ist, der zweite Anschluss (22) mit der zweiten Elektrode (12) über eine zweiten Leitungsstreifen (22a) verbunden ist, wobei die dritte Isolierplatte (36, 56) zwischen dem ersten Leitungsstreifen (21 a) und dem Gehäuse (14) angeordnet ist und die vierte Isolierplatte (38, 58) zwischen dem ersten Leitungsstreifen (22a) und dem Gehäuse (14) angeordnet ist.

11. Wiederaufladbare Batterie nach einem der vorstehenden Ansprüche, wobei das Unterteil (31, 51)
eine viereckige Form aufweist; und/oder
mit einer bogenförmigen Oberfläche im Kontaktbereich mit dem Boden der Elektrodenanordnung (15) versehen ist; und/oder
dicht am Boden des Gehäuses (14) angebracht ist.

## Revendications

1. Batterie rechargeable, comprenant :
un ensemble d'électrodes (15) comportant une première électrode (11), une deuxième électrode (12), et un séparateur (13) interposé entre la première et la deuxième électrode (12, 11), la première électrode (11) et la deuxième électrode (12) avec le séparateur (13) entre celles-ci étant enroulées sous la forme d'un gâteau roulé;
un boîtier (14) pour monter l'ensemble d'électrodes (15) à l'intérieur de celui-ci ; et
un élément isolant (30, 41, 42, 43, 50) disposé entre les parois latérales du boîtier (14) et l'ensemble d'électrodes (15) afin d'isoler le boîtier (14) de l'ensemble d'électrodes (15), l'élément isolant (30, 41, 42, 43, 50) comprenant une base (31, 51) en contact avec le fond du boîtier (14) ; une première plaque isolante (32, 52) ; une deuxième plaque isolante (34, 54) ; une troisième plaque isolante (36, 56) ; et une quatrième plaque isolante (38, 58), les quatre plaques isolantes étant toutes fixées à la base (31, 51) et étant toutes agencées de façon à faire face aux quatre surfaces latérales de l'ensemble d'électrodes (15), respectivement,
**caractérisée en ce que** :
une vue éclatée de l'élément isolant (30, 41, 42, 43, 50) a la forme d'une croix, et
l'ensemble d'électrodes enroulé (15) comprend des parties plates (15a) dans sa région médiane et des parties convexes (15b) dans ses parties latérales inférieure et
supérieure, les surfaces des première et deuxième plaques isolantes (32, 52 ; 34, 54) qui sont en contact avec l'ensemble d'électrodes (15) étant formées de telle sorte que leur forme corresponde à la forme de la surface de l'ensemble d'électrodes (15) qui comporte des parties plates et convexes (15a, 15b),
dans laquelle la première plaque isolante (32, 52) comprend une première partie de support (32a, 52a) et la deuxième plaque isolante (34, 54) comprend une deuxième partie de support (34a, 54a), les parties de support (32a, 52a ; 34a, 54a) :
étant plates lorsqu'elles viennent en contact avec la partie plate respective (15a) de l'ensemble d'électrodes (15), et
étant inclinées ou incurvées dans la région de la partie convexe respective (15b) de l'ensemble d'électrodes (15), de façon à correspondre à la forme de l'ensemble d'électrodes (15).

2. Batterie rechargeable selon la revendication 1, dans laquelle l'élément isolant (30, 41, 42, 43, 50), lorsqu'il est plié, s'adapte à la forme du boîtier.

3. Batterie rechargeable selon l'une quelconque des revendications précédentes, dans laquelle la forme de la surface de l'élément isolant (30, 41, 42, 43, 50) qui est en contact avec l'ensemble d'électrodes (15) est conçue de façon à correspondre à la forme extérieure de l'ensemble d'électrodes (15).

4. Batterie rechargeable selon la revendication 1, dans laquelle la partie de support (32a, 52a ; 34a ; 54a) comprend au moins l'une des caractéristiques suivantes :
la partie de support est étroitement fixée à la partie plate (15a) de l'ensemble d'électrodes (15) et supporte l'ensemble d'électrodes (15) ;
est formée de façon à comporter une rainure tampon (52b) adaptée de façon à permettre la dilatation de la batterie ;
est plate dans la région où elle vient en contact avec la partie plate (15a) de l'ensemble d'électrodes (15) ;
est inclinée ou incurvée sous une forme d'arc à l'endroit où elle vient en contact avec la partie convexe (15b) de l'ensemble d'électrodes ; et
a une section transversale de forme trapézoïdale.

5. Batterie rechargeable selon la revendication 1 ou 4, dans laquelle les parties de support (32a, 52a ; 34a, 54a) comprennent des feuilles de film stratifiées les unes avec les autres.

6. Batterie rechargeable selon l'une quelconque des revendications précédentes, dans laquelle l'élément isolant (30, 41, 42, 43, 50) est constitué par un matériau sélectionné parmi le groupe comprenant le polypropylène, le polyéthylène, le poly(sulfate de phényle), le poly-(téréphtalate de butylène), le polytétrafluoréthylène, le perfluoralkoxy (PFA), l'éthylène-propylène fluoré, le poly(fluorure de vinylidène).

7. Batterie rechargeable selon l'une quelconque des revendications précédentes, dans laquelle l'élément isolant (30, 41, 42, 43, 50) a la forme d'un cuboïde avec le dessus ouvert.

8. Batterie rechargeable selon l'une quelconque des revendications précédentes, dans laquelle l'élément isolant (30, 41, 42, 43, 50) comprend une rainure (35) sur la limite entre la base (31) et les plaques isolantes (32, 34, 36, 38), la rainure (35) :
étant disposée sur le dessus de la surface de la base (31) faisant face à l'ensemble d'électrodes (15) ou sur le dessous de la surface de la base (31) faisant face au boîtier (14) ; et/ou
ayant une section transversale triangulaire ; et/ou
ayant une section transversale quadrangulaire.

9. Batterie rechargeable selon l'une quelconque des revendications précédentes, dans laquelle la troisième plaque isolante (36, 56) et la quatrième plaque isolante (38, 58) ont une forme plane.

10. Batterie rechargeable selon l'une quelconque des revendications précédentes, dans laquelle la batterie comprend de plus une première borne (21) et une deuxième borne (22), la première borne (21) étant connectée à la première électrode (11) par l'intermédiaire d'une première patte conductrice (21 a), la deuxième borne (22) étant connectée à la deuxième électrode (12) par l'intermédiaire d'une deuxième patte conductrice (22a), la troisième plaque isolante (36, 56) étant disposée entre la première patte conductrice (21a) et le boîtier (14), et la quatrième plaque isolante (38, 58) étant disposée entre la deuxième patte conductrice (22a) et le boîtier (14).

11. Batterie rechargeable selon l'une quelconque des revendications précédentes, dans laquelle la base (31, 51 ) :
a une forme quadrangulaire ; et/ou
est munie d'une surface supérieure en forme d'arc dans la région de contact avec le bas de l'ensemble d'électrodes (15) ; et/ou
est étroitement fixée au fond du boîtier (14).
